# DEMANDE DE BREVET EUROPEEN

(11) **EP 3 088 937 A1**
(43) Date de publication de la demande: **02.11.2016**
(21) Numéro de dépôt: 15165282.3
(22) Date de dépôt: 27.04.2015
(51) Int. Cl.: G02C 9/04, G02C 1/06

(54) **LUNETTE À MONTURE PERSONNALISABLE**

(71) Demandeur: SWATCH AG, 2502 Biel/Bienne (CH)
(72) Inventeur: Giordanetti, Carlo, 8008 Zürich (CH)
(74) Mandataire: Ravenel, Thierry Gérard Louis

(57) **Abrégé**

L'invention se rapporte à des lunettes constituées d'un élément de façade destiné à être relié à deux branches latérales, au moins un élément de personnalisation supportant des verres et configuré pour être fixé de manière amovible sur l'élément de façade par l'intermédiaire de moyens de maintien complémentaires. Selon l'invention, les moyens de maintien complémentaires comprennent d'une part, au moins un téton, faisant saillie sensiblement perpendiculairement à partir de la face arrière de l'élément de personnalisation, et d'autre part, au moins une découpe, formée dans l'élément de façade, la découpe étant agencée pour se déformer élastiquement de manière à exercer une force de rappel élastique sur le téton après son introduction dans la découpe pour maintenir élément de personnalisation sur l'élément de façade.

## Description

### Domaine de l'invention

L'invention se rapporte au domaine des lunettes, aussi bien de vue que solaire, et vise plus particulièrement la personnalisation des lunettes par le biais d'un élément de parure.

### Résumé de l'invention

L'invention a pour objectif de fournir des lunettes aisément personnalisables, notamment sans l'utilisation d'un outil.

L'invention a également pour objectif, au moins dans un mode de réalisation particulier, de fournir une personnalisation de lunettes qui soit simple à mettre en oeuvre et peu coûteuse.

Ces objectifs, ainsi que d'autres qui apparaîtront plus clairement par la suite, sont atteints selon l'invention à l'aide de lunettes constituées d'un élément de façade destiné à être relié à deux branches latérales, au moins un élément de personnalisation supportant des verres et configuré pour être fixé de manière amovible sur l'élément de façade par l'intermédiaire de moyens de maintien complémentaires.

Selon l'invention, les moyens de maintien complémentaires comprennent d'une part, au moins un téton, faisant saillie sensiblement perpendiculairement à partir de la face arrière de l'élément de personnalisation, et d'autre part, au moins une découpe, formée dans l'élément de façade, la découpe étant agencée pour se déformer élastiquement de manière à exercer une force de rappel élastique sur le téton après son introduction dans la découpe pour maintenir élément de personnalisation sur l'élément de façade

Selon un mode de réalisation préférentiel de l'invention, les moyens de maintien complémentaires comprennent une lame élastique en forme de C dans la découpe, la lame élastique comprenant une première branche venant de matière avec l'élément de façade, et un seconde branche élastique libre.

Conformément à d'autres variantes avantageuses de l'invention :
- la seconde branche élastique libre est agencée pour se déformer dans le plan de l'élément de façade ;
- la découpe comprend un dégagement facilitant la déformation de la lame élastique dans le plan de l'élément de façade;
- l'ouverture présente une forme en trou de serrure, à savoir une base trapézoïdale surmontée d'un cercle, le haut de la base trapézoïdale formant un passage plus étroit de manière à former un point dur lors du passage du téton dans l'ouverture ;
- le diamètre du cercle de l'ouverture est sensiblement identique au diamètre du téton ;
- l'élément de personnalisation comprend au moins une gouttière munie d'une rigole débouchant vers le haut, disposée dans une zone supérieure de l'élément de personnalisation, la rigole étant configurée pour recevoir tout ou partie de l'élément de façade ;
- la gouttière comprend une couche d'un matériau déformable élastiquement disposé sur le fond de la rigole ;
- l'élément de façade est formé à partir d'une seule partie découpée et pliée ;
- l'élément de façade est réalisé à partir d'un matériau ferromagnétique et le téton est réalisé en un matériau magnétique de manière à renforcer le maintien de l'élément de personnalisation en position contre l'élément de façade ;
- le téton comprend un fût attaché à l'élément de personnalisation, le fût se terminant par un renflement radial (12), et la longueur du fût étant sensiblement identique à l'épaisseur de l'élément de façade ;
- le téton vient de matière avec l'élément de personnalisation.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue en perspective d'une paire de lunettes conforme à l'invention ;
- la figure 2 est une vue de face d'un élément de façade conforme à l'invention ;
- les figures 3a et 3b sont, respectivement, une vue en perspective d'un élément de personnalisation et une vue détaillée d'un moyen de maintien conforme à l'invention ;
- la figure 4 est une vue en coupe selon la ligne I des lunettes illustrées à la figure 1,
- les figure 5a à 5c illustrent les différentes formes de l'élément de personnalisation conforme à l'invention.

### Description détaillée des modes de réalisation préférés

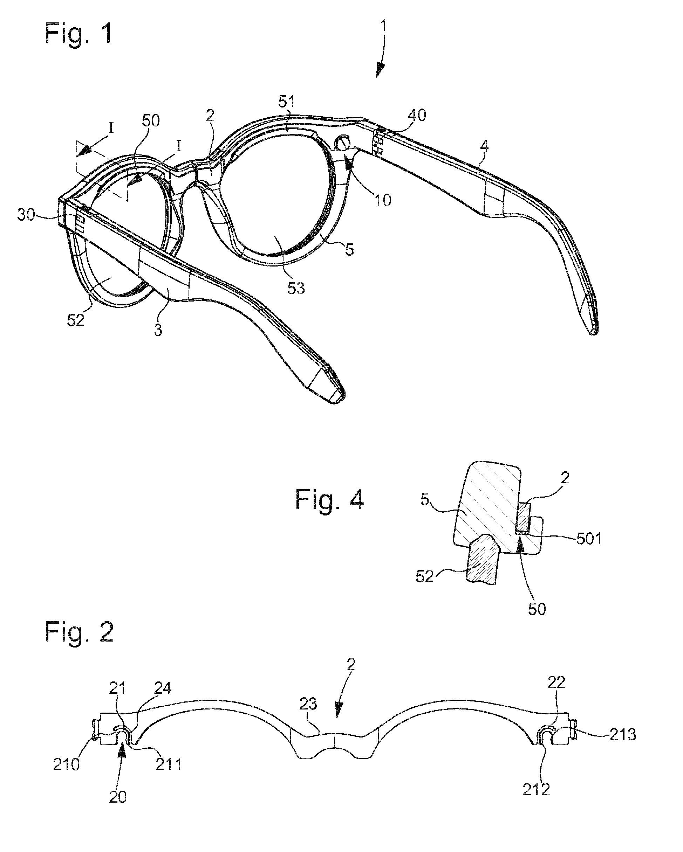

Une paire de lunettes conforme à l'invention va maintenant être décrite dans ce qui suit faisant référence conjointement aux figures 1, 2, 3a, 3b, 4 et 5a à 5c.

L'invention concerne des lunettes 1 constituées d'un élément de façade 2 formé par un pont 23 qui est destiné à être relié à deux branches latérales 3 et 4 par l'intermédiaire de charnières correspondantes 30 et 40. Les lunettes 1 comprennent également un élément de personnalisation 5 configuré pour être fixé de manière amovible sur l'élément de façade 2 par l'intermédiaire de moyens de maintien complémentaires.

Les moyens de maintien complémentaires comprennent d'une part, au moins un téton 50, faisant saillie sensiblement perpendiculairement à partir de la face arrière de l'élément de personnalisation 5, et d'autre part, au moins une découpe 20, formée dans l'élément de façade 2, la découpe 20 étant agencée pour se déformer élastiquement de manière à exercer une force de rappel élastique sur le téton 10 après son introduction dans la découpe 20 pour maintenir élément de personnalisation 5 sur l'élément de façade 2.

Selon un premier mode de réalisation, un téton 50 est disposé au niveau du coin supérieur gauche et du coin supérieur droit de la face arrière de l'élément de personnalisation 5, chaque téton 50 étant configuré pour coopérer avec une découpe 20 respectif disposé à chaque extrémité de l'élément de façade 2.

Selon un mode de réalisation préférentiel de l'invention, illustré sur les figures, les moyens de maintien complémentaires comprennent une lame élastique 21 en forme de C dans la découpe 20, la lame élastique 21 comprenant une première branche 210 venant de matière avec l'élément de façade 2, et un seconde branche élastique libre 211.

Avantageusement, la seconde branche élastique libre 211 est agencée pour se déformer dans le plan de l'élément de façade. Par ailleurs, la découpe 20 comprend un dégagement 22, autour de la lame élastique 21, pour faciliter la déformation de la lame élastique 21 quand le pion 10 est introduit dans la découpe 20.

L'élément de façade 2 peut être formé d'une seule partie découpée puis pliée pour sa mise en forme, et peut être réalisé à partir d'une plaque ou une bande métallique. Une opération d'étampage peut également être envisagée pour obtenir l'élément de façade 2.

Comme on peut le voir à la figure 2, la lame élastique 21 fait partiellement le tour de la découpe 20 de manière à former un passage plus étroit que le téton 10 et maintenir le téton 10 dans la découpe 20 lorsque l'élément de personnalisation 5 est rapporté sur l'élément de façade 2 selon un plan vertical parallèle à l'élément de personnalisation par exemple. Ainsi, la fixation l'élément de personnalisation 5 sur l'élément de façade 2 peut se faire de haut en bas ou de bas en haut suivant la position de la découpe 20.

Selon l'invention, le téton 10 est lié à l'élément de personnalisation 5 et présente, dans le sens de sa longueur, un fût 11 qui fait saillie de cette élément de personnalisation 5, qui s'étend suivant une direction axiale Z, et qui se termine par un renflement radial 12.

Telle que représentée à la figure 2, la découpe 20 est en forme de trou de serrure, à savoir une base trapézoïdale 212 surmontée d'un cercle 213, le haut de la base trapézoïdale 212 formant un passage plus étroit de manière à former un point dur lorsque le fût 11 du téton 10 passe dans la découpe 20.

Avantageusement, le diamètre du cercle est sensiblement identique au diamètre du fût 11 du téton 10.

Comme on peut l'observer à la figure 2, le dégagement 22 définit le débattement possible de la lame élastique 21, l'élément de façade 2 présentant une surface de contact 24 jouant le rôle de butée de manière que la lame flexible 21 ne dépasse pas sa limite de déformation élastique.

Grâce à cet agencement, chaque lame élastique 21 est déplacée de sa position de repos dans le plan de l'élément de façade 2 au passage du fût 11 du téton 10, jusqu'à ce que le fût 11 passe le point dur et se loge dans le cercle 213, chaque lame élastique 21 reprenant sa position de repos une fois que le fût 11 est logé dans le cercle 213, le téton 10 étant alors maintenu en place dans la découpe 20.

Bien évidemment, d'autres formes peuvent être imaginées pour les moyens de maintien complémentaires.

L'épaisseur de l'élément de façade 2 est prévue inférieure ou égale à la longueur du fût 11 du téton 10 pour faciliter la fixation de l'élément de personnalisation 5 sur l'élément de façade 2. De plus, le renflement radial 12 du téton 10 peut former une butée suivant la direction axiale Z du téton 10, de manière à empêcher l'élément de personnalisation 5 de coulisser le long du fût 11 du téton 10 et de se détacher de l'élément de façade 2.

Selon un mode de réalisation particulier de l'invention, l'élément de personnalisation 5 comprend au moins une gouttière 50 munie d'une rigole 500 débouchant vers le haut. La gouttière 50 est disposée dans la zone supérieure de l'élément de personnalisation 5, au-dessus des verres 52, 53 par exemple, et est configurée pour recevoir tout ou partie de l'élément de façade 2. La rigole 500 présente une largeur légèrement supérieure à l'épaisseur de l'élément de façade 2 afin d'assurer en bon maintien de l'élément de personnalisation 5 sur l'élément de façade 2.

On entend par zone supérieure de l'élément de personnalisation 5 la zone se trouvant en haut lorsque les lunettes sont en position portée.

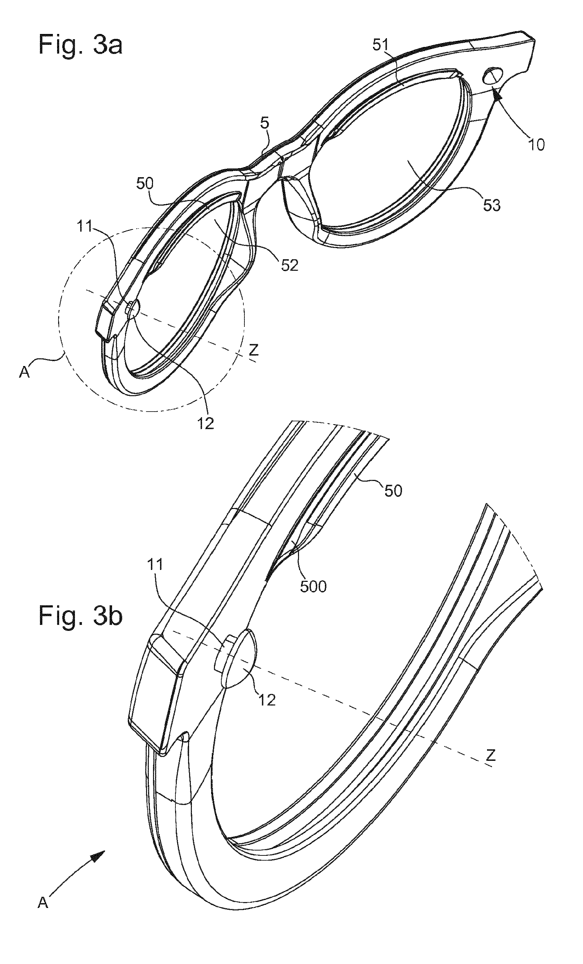

Comme on peut l'observer à la figure 3a, l'élément de personnalisation 5 comprend une gouttière 50 disposée au-dessus de chaque verre 52 et 53. On pourrait également imaginer une gouttière continue s'étendant sur tout ou partie de la longueur de l'élément de personnalisation 5.

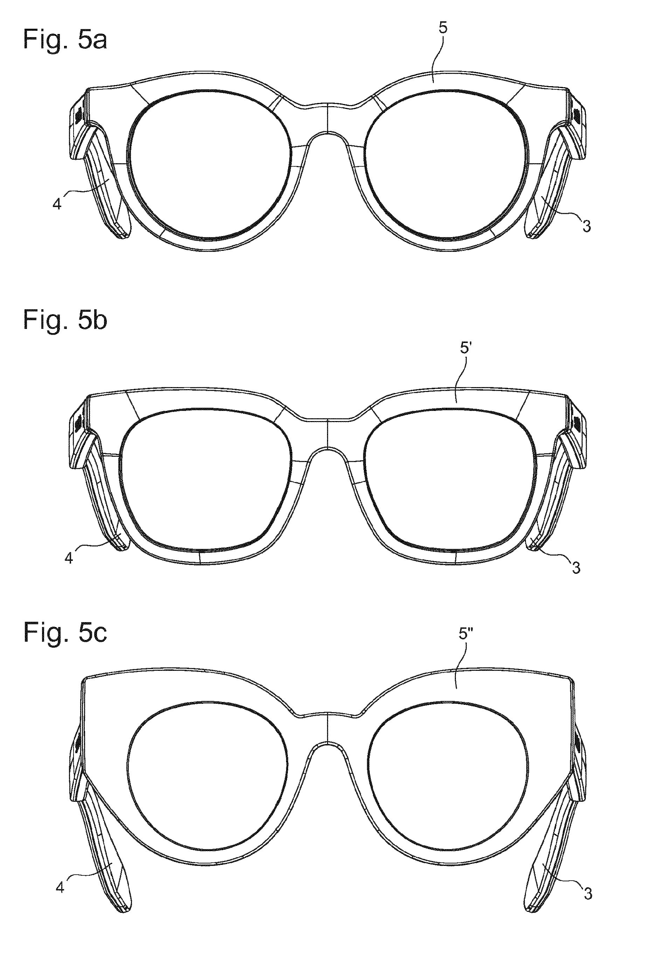

Comme on peut l'observer à la figure 5, il peut être prévu de disposer un matériau déformable élastiquement 501, tel qu'un matériau élastomère par exemple, au fond de la rigole 500 de la ou les gouttières 50, 51 de façon à combler un jeu éventuel après la fixation de l'élément de personnalisation 5 sur l'élément de façade 2.

Encore selon un mode de réalisation additionnel, l'élément de façade 2 est réalisé à partir d'un matériau ferromagnétique et le téton 10 est réalisé en un matériau magnétique et est fixé à l'élément de personnalisation 5. Selon ce mode de réalisation, l'élément de façade 2 ainsi que les moyens de verrouillage sont réalisés en un matériau métallique, comme du fer, du cobalt, du nickel ou un de leurs alliages, de manière à renforcer le maintien de l'élément de personnalisation 5 en position contre l'élément de façade 2. Ce mode de réalisation présente également pour avantage de permettre le maintien de l'élément de personnalisation 5 contre l'élément de façade 2 au cas où la lame élastique 21 viendrait à se casser.

Grâce à ces différents aspects de l'invention, on dispose d'une paire de lunettes 1 de conception simple permettant une personnalisation rapide et aisée. De tels exemples de personnalisation sont visibles aux figures 5a, 5b et 5c.

Bien entendu, la présente invention ne se limite pas à l'exemple illustré et est susceptible de diverses variantes et modifications qui apparaîtront à l'homme de l'art.

### NOMENCLATURE

1. Lunettes
10. Téton,
11. Fût du téton,
12. Renflement radial du téton
2. Elément de façade,
20. Découpe,
21. Lame élastique,
210. Première branche,
211. Seconde branche élastique,
212. Base trapézoïdale,
213. Cercle
22. Dégagement,
23. Pont,
24. Surface de contact,
3,4. Branches,
30,40. Charnières,
5,5',5". Elément de personnalisation,
50,51. Gouttières,
500. Rigole,
501. Couche matériau déformable élastiquement,
52,53. Verres,
Z. Direction axiale du téton.

## Revendications

**1.** Lunettes (1) constituées d'un élément de façade (2) destiné à être relié à deux branches latérales (3,4), au moins un élément de personnalisation (5) supportant des verres (52, 53) configuré pour être fixé de manière amovible sur l'élément de façade (2) par l'intermédiaire de moyens de maintien complémentaires,
**caractérisé en ce que** les moyens de maintien complémentaires comprennent d'une part, au moins un téton (50), faisant saillie sensiblement perpendiculairement à partir de la face arrière de l'élément de personnalisation (5), et d'autre part, au moins une découpe(20), formée dans l'élément de façade (2), la découpe (20) étant agencée pour se déformer élastiquement de manière à exercer une force de rappel élastique sur le téton (10) après son introduction dans la découpe (20) pour maintenir élément de personnalisation (5) sur l'élément de façade (2).

**2.** Lunettes (1) selon la revendication 1, dans lesquelles les moyens de maintien complémentaires comprennent une lame élastique (21) en forme de C dans la découpe (20), la lame élastique (21) comprenant une première branche (210) venant de matière avec l'élément de façade (2), et un seconde branche élastique (211) libre.

**3.** Lunettes (1) selon la revendication 2, dans lesquelles la seconde branche élastique (211) libre est agencée pour se déformer dans le plan de l'élément de façade (2).

**4.** Lunettes (1) selon l'une des revendications 1 à 3, dans lesquelles l'ouverture (20) présente une forme en trou de serrure, à savoir une base trapézoïdale (212) surmontée d'un cercle (213), le haut de la base trapézoïdale (212) formant un passage plus étroit de manière à former un point dur lors du passage du téton (10) dans l'ouverture (20).

**5.** Lunettes (1) selon la revendication 4, dans lesquelles le diamètre du cercle (213) de l'ouverture (20) est sensiblement identique au diamètre du téton (10).

**6.** Lunettes (1) selon l'une des revendications 1 à 5, dans lesquelles la découpe (20) comprend un dégagement (22) facilitant la déformation de la lame élastique (21) dans le plan de l'élément de façade (2).

**7.** Lunettes (1) selon l'une des revendications 1 à 6, dans lesquelles l'élément de personnalisation (5) comprend au moins une gouttière (50) munie d'une rigole (500) débouchant vers le haut, disposée dans une zone supérieure de l'élément de personnalisation (5), la rigole (500) étant configurée pour recevoir tout ou partie de l'élément de façade (2).

**9.** Lunettes (1) selon la revendication 7, dans lesquelles la gouttière (50) comprend une couche (501) d'un matériau déformable élastiquement disposé sur le fond de la rigole (500).

**10.** Lunettes (1) selon l'une des revendications 1 à 8, dans lesquelles l'élément de façade (2) est formé à partir d'une seule partie découpée et pliée.

**11.** Lunettes (1) selon l'une des revendications 1 à 10, dans lesquelles l'élément de façade (2) est réalisé à partir d'un matériau ferromagnétique et le téton (10) est réalisé en un matériau magnétique de manière à renforcer le maintien de l'élément de personnalisation (5) en position contre l'élément de façade (2).

**12.** Lunettes (1) selon l'une des revendications 1 à 11, dans lesquelles le téton (10) comprend un fût (11) attaché à l'élément de personnalisation (5), le fût (11) se terminant par un renflement radial (12), et la longueur du fût (11) étant sensiblement identique à l'épaisseur de l'élément de façade (2).

**13.** Lunettes (1) selon l'une des revendications 1 à 10, 12 et 13, dans lesquelles le téton (10) vient de matière avec l'élément de personnalisation (5).
